# EUROPEAN PATENT APPLICATION

(11) **EP 0 640 961 A1**
(43) Date of publication of application: **01.03.1995**
(21) Application number: 94306222.4
(22) Date of filing: 23.08.1994
(51) Int. Cl.: G11B 7/08, G11B 7/12

(54) **An apparatus for use in adjusting an optical head**

(30) Priority: 24.08.1993 JP 209572/93
(71) Applicant: International Business Machines Corporation, Armonk, N.Y. 10504 (US)
(72) Inventor: Yamada, Fumiaki, Yokohama-shi, Kanagawa-ken (JP)
(74) Representative: Richards, John Peter

(57) **Abstract**

An apparatus for use in adjusting an optical head 100 of a kind including a laser beam includes a Faraday rotator 101, a convex lens 103 and a target 105 located on the beam optical axis. The Faraday rotator includes a coil surrounding a material exhibiting the Faraday effect for rotating the plane of polarization of the laser beam by applying a current to the coil, the convex lens is mounted upon a first mechanism which moves the lens along the optical axis in accordance with a first electrical signal, and the target is mounted upon a second mechanism which moves the lens transverse the optical axis in accordance with a second electrical signal. The target has at least one groove at its surface. The apparatus is used to generate servo signals equivalent to those generated by a reference disk conventionally used in adjusting an optical head.

## Description

This invention relates to an apparatus for use in adjusting an optical head of a kind including a laser beam.

An optical head is a device which applies a laser beam to an optical storage medium for reading information recorded on the medium through the reflected state of the laser beam. The optical head must have two functions. The first is an emitting function for applying a laser beam to an accurate position on the storage medium in an accurately focused state and, second, a signal detecting function for detecting the light reflected from the storage medium. Information is stored on an optical storage medium in accordance with the physical shape of the track at the surface of the disk or by means of the physical, chemical or magnetic state of the track. To read information, it is necessary to apply light accurately to the track and detect reflected light continuously. The following description refers to an optical disk as the optical storage medium, but the invention can be applied to other optical storage media.

The emitting function comprises emitting a laser beam for recording and reproducing information onto and from the disk, accurately adjusting the focus of the laser beam by moving an objective lens along the optical axis by an actuator to focus the laser beam on a fine area on the disk, and tracking the laser beam to a track where a desired signal is recorded. These operations must be performed continuously while the laser beam is applied to the optical storage medium because fluctuations occur typically in a range of approx. 100 m in the optical axis direction during rotation of the optical disk due to planar inaccuracy of the medium, and fluctuations occur typically in a range of 50 to 100 m in the radial direction of the disk during rotation due to track inaccuracy. Therefore, it is necessary to continuously move the objective lens, by using the actuator, to apply the laser beam to the disk at the correct focus and in the correct tracking state.

Information for detecting correct focus and a correct tracking state is included in the light reflected from the disk in the form of its intensity, wave front state and polarization. The reflected light also includes information recorded on the optical recording medium. These pieces of information are read by a signal detecting optical system which includes information detecting optics, focus signal detecting optics, and track signal detecting optics. Focus and tracking information is fed back to the actuator and used as information for servo operation to have the laser beam correctly follow the track. Hereafter, a signal detected from light reflected from the disk as information for the servo operation is referred to as a servo signal.

Unless each of these detecting systems is set to a proper position when the optical head is manufactured, it is impossible to detect the servo signal accurately. Therefore, it is impossible to perform servo operation for accurately applying the laser beam to the track of the optical recording medium.

In the case of a conventional optical disk drive, the diameter of the focused spot on the disk is approx. 0.9 m, and the pitch between data tracks on it is 1.6 m. As a result, an accuracy of approx. ±1 m is required in the direction of the optical axis in the case of focus and an accuracy of approx. ±0.1 m in the radial direction in the case of tracking. High-accuracy positioning of the focused spot is realized by the servo technique and high accuracy is required for servo signal detection for focusing and tracking. Therefore, as described above, highly accurate mechanical positioning is also required for assembling the signal-detecting optical systems of an optical head. In general, it is necessary to adjust the position of each part to an accuracy of several microns during assembly.

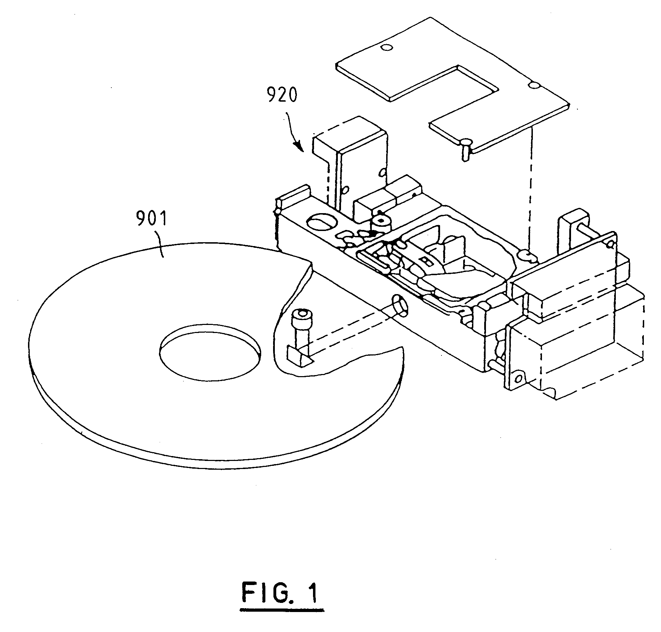

In assembling an optical head, the position of each detector in the optical head 920 (Figure 1) has conventionally been determined by using an adjustment reference disk 901 to optimize the detected servo-signal.

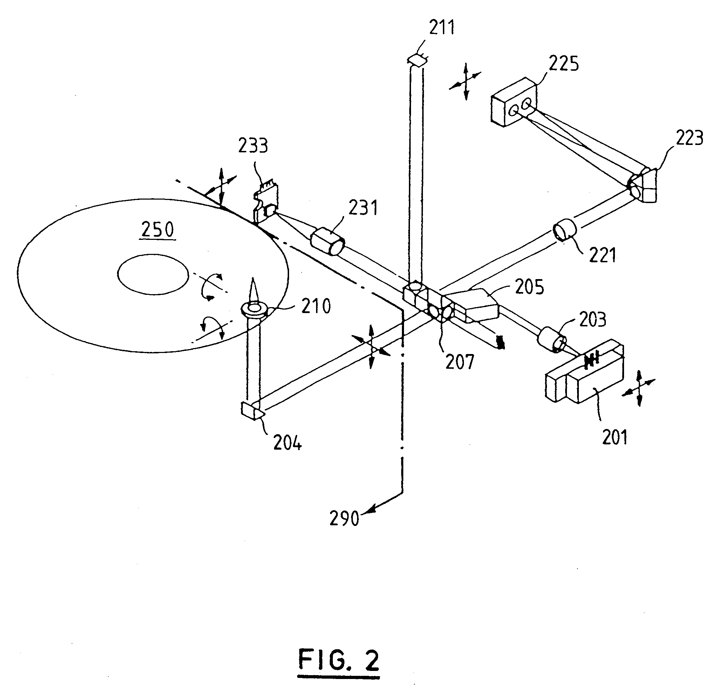

Figure 2 is a schematic view of the use of a reference disk for the adjustment of a separate optics-type optical head for a magneto-optical disk. A laser beam emitted from a laser diode 201 is converted to parallel rays by a collimator lens 203 and converted to a shape closely approaching a perfect circle by a beam circularizer 205 in which the direction of the beam is also changed. Then, the laser beam passes through a beam splitter 207 and its direction is changed again by a mirror 204 and the beam is thereafter focused by an objective lens 210 onto the reference disk 250. The laser beam reflected by the reference disk 250 includes a data signal and servo signals for focus and tracking, and returns to the beam splitter 207 through the same path. Then, the beam splitter 207 splits the reflected light in the direction of respective detectors for detecting focus and tracking signals and data information.

The focus state is detected by a quad-split detector 233 after passing through an amorphic lens 231, and the tracking state is detected by a far-field detector 211. The information stored in the tracks is detected by an MO signal detector 225 after passing through a 1/2-wave plate 221 and a polarized beam splitter 223.

The focus state is detected when reflected light reaches the quad-split detector 233 through the amorphic lens 231. The amorphic lens is defined as a lens whose focus differs in the x and y axes drawn on a plane normal to the optical axis. The amorphic lens and quad-split detector must be arranged at a predetermined separation in the direction of the optical axis, and a positional error in the amorphic lens of only several tens of microns is permitted with regard to the quad-split detector. Also, a positional error of only several tens of microns or less in the x and y directions is permitted for the quad-split detector in the plane normal to the optical axis. Similarly, a positional error in the far-field detector 211 of only several hundreds of microns is permitted in each direction in the plane normal to the optical axis.

For a magneto-optical disk, information is recorded on a recording medium by magnetism. In this case, the direction of magnetization is detected in accordance with the polarized state based on the Kerr effect upon application of a laser beam. This is performed by detecting a light signal split by the polarized beam splitter 223 through the 1/2-wave plate 221 by the MO signal detector 225. The polarized direction of the signal detection light must be rotated up to a predetermined angle in accordance with the state of the 1/2-wave plate 221, and the MO signal detector must be arranged at a predetermined position. In this case, it is necessary to limit the error of the rotation angle of the 1/2-wave plate to several degrees and the positional error of the MO signal detector in x and y directions on the plane normal to the optical axis to several hundred microns or less.

Therefore, the step of assembling an optical head requires a process for accurately setting the position of each detector. Conventionally, a reference disk is used to position the detectors, as previously mentioned. A laser beam is applied to the disk to determine the position of each detector so that the detection state is optimized by monitoring the reflected light of the laser beam. In particular, focus and tracking signals are observed, and adjustments are made one by one so that the position of each component approaches a point where all signals are optimized. To do this, it is necessary to roughly determine the initial position of each detector so that servo loops can be closed to start the adjustments.

However, at the beginning of the adjustment, the position of each detector is only very roughly set, and it is very difficult to obtain accurate information by detecting the servo signal for focus and tracking in the light reflected from the reference disk.

Further, both the focus and tracking signals are generated simultaneously by the reference disk, and it is difficult to separately generate one from the other, and mutual interference of the signals cannot be avoided. Moreover, an adjustment frequently influences a plurality of signals because of the structure of the optical head.

The problem of the conventional adjusting method lies in the fact that the reliability of signals coming from a reference disk serving as an index for adjustment is low, because these signals are influenced by the characteristics of servo circuits and actuators, while they simultaneously interfere each other. It is therefore an object of the present invention to provide a technique for positioning elements of an optical head without using a signal coming from a reference disk.

This object is achieved by the invention claimed in claim 1.

The apparatus according to the invention can generate a modulated laser beam which contains signal information for focusing, tracking and data, and which may be used for adjustment similar to the reflected light generated by a laser beam applied to a reference disk. Thus a laser beam is emitted from an optical head to be adjusted, and it is modulated by the objective lens (for focus), the target (for tracking) and, in the case of magneto-optical recording, the Faraday rotator, and returned to the detecting system of the optical head.

An embodiment of the invention will now be described, by way of example, with reference to the accompanying drawings, in which:
Figure 1 shows how an optical head is adjusted according to the prior art;
Figure 2 shows in more detail how an optical head is adjusted according to the prior art;
Figure 3 shows how an optical head is adjusted using an apparatus according to the present embodiment;
Figure 4 shows the mechanism of the Faraday rotator of Figure 3;
Figure 5 shows the mechanism of the objective lens assembly of Figure 3;
Figure 6 shows the mechanism of the target assembly of Figure 3;
Figure 7 shows a detail of the surface of the target; and
Figure 8 shows an application of the present invention.

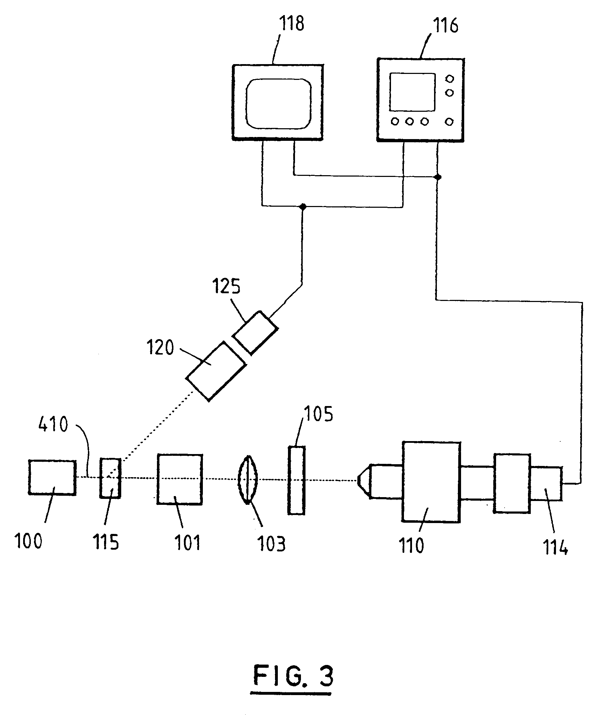

Referring to Figure 3, an optical head 100 to be assembled and adjusted is mounted in front of an apparatus comprising a Faraday rotator 101, an objective (convex) lens assembly 103 and a target assembly 105, all located along the optical axis 410 of the laser beam emitted by the head 100. Although shown separately in Figure 3, the assemblies 101, 103 and 105 are in practice mounted in a common housing with an aperture for the receipt of the laser beam from, and the return of the laser beam to, the head 100.

The assemblies 101, 103 and 105 permit the independent generation of three types of signal which could not be independently provided by a conventional system using a reference disk, these being signals for adjusting the focus detector, the tracking detector and an M0 signal detector.

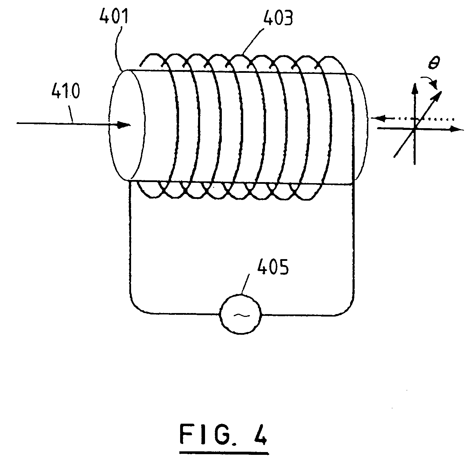

Figure 4 shows the Faraday rotator 101. It comprises a coil 403 wound around a glass or other transparent material 401 with a large Faraday constant located on the optical axis 410 so as to rotate the plane of polarization of the laser beam approximately in proportion to the current in the coil 403. The current in the coil 403, which is adjustable, is provided by a power supply 405. A rotation-angle signal of polarized light similar to a Kerr rotation signal in the case of a magneto-optical disk is thereby generated.

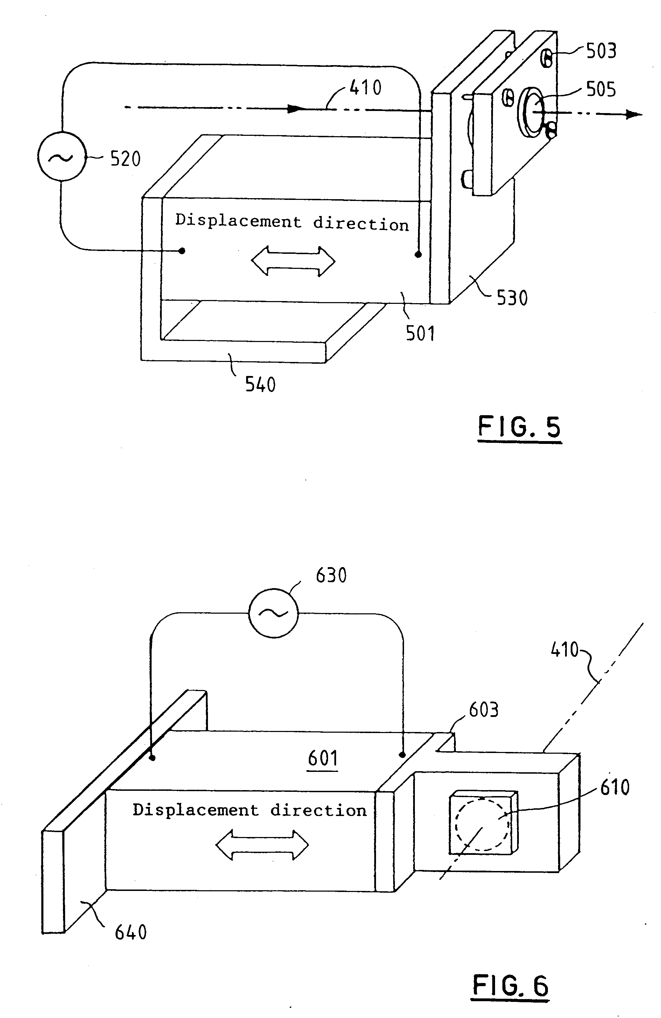

Figure 5 shows the objective lens assembly 103. The lens proper 505 is carried in a lens mount 503 which is mounted in turn on a plate 530 attached to the free end of an actuator 501, such as a piezoelectric element. The other end of the element 501 is secured to a fixed support 540. An adjustable voltage from a power supply 520 is applied across the piezoelectric element 501 for driving the plate 530, and hence the lens 505, for movement along the optical axis 410 of the laser beam from the optical head 100, thereby to generate a signal for detecting a focus state. It is preferable to use a laminated piezoelectric element for the piezoelectric element.

The target assembly 105 has a target proper 610 on the optical axis 410 of the laser beam, as shown in Figure 6, the laser beam being focussed on this target 610 in use. The target 610 is carried by a mounting plate 603 which is attached to the free end of an actuator 601, again preferably a laminated piezoelectric element. The other end of the element 601 is secured to a fixed support 640. An adjustable voltage from a power supply 630 is applied across the piezoelectric element 601 for driving the mounting plate 603, and hence the target 610, for movement in a plane normal to the optical axis 410 of the laser beam from the optical head 100.

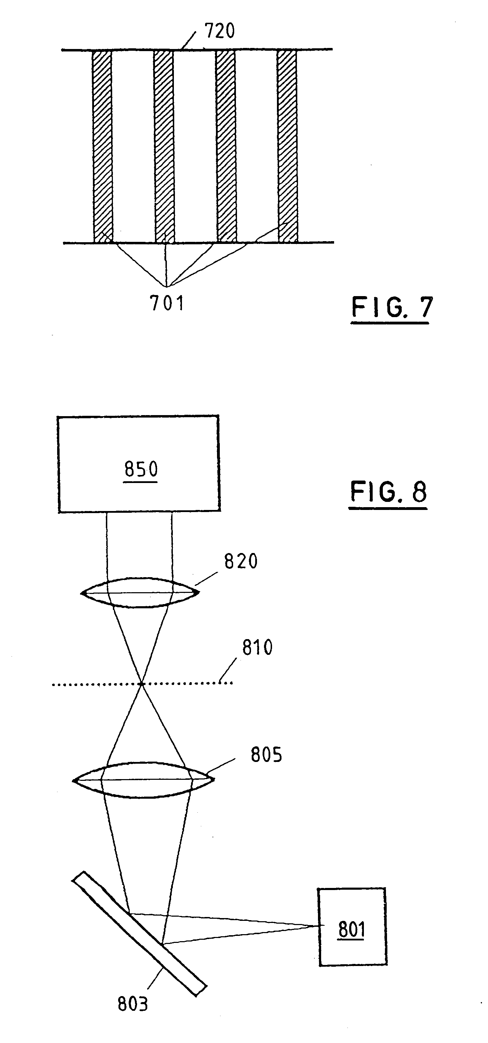

Figure 7 is an enlarged view of the surface of the target 610. Grooves 701 are formed on the surface of the target at an interval which is the same as the track interval in an optical disk, and a reflecting film 720 is provided on the surface of the target. The position on the target where the laser beam is reflected is adjusted by moving the target with the actuator 601, so as to generate a tracking signal.

In use, the light modulation apparatus shown in Figure 3 to the right of the optical head 100 is substituted for the reference disk 250 and objective lens 210 of the standard method, the laser beam from the head 100 being directed into the apparatus along the optical axis 410 and being returned to the head 100 after reflection at the target 105. The focus, tracking and, in the case of a magneto-optical system, the data "servo" signals modulated onto the laser beam by the elements 101, 103 and 105 in the course of the beam's passage to the target 105 and back to the head 100 are used to adjust the detector elements in the optical head shown in Figure 2 in the same way as this was previously done using the servo signals in the beam reflected from the reference disk.

In a further development, the reflecting film on the target 105 serves as a half mirror so that the state of the laser beam focused on the target can be observed by a microscope 110 (Figure 3). This information can be also observed by an oscilloscope 116 or a TV monitor 118 through a CCD camera 114. This permits confirmation that the distance between the objective lens 103 and the target 105 is correct, that focusing has been correctly carried out, and that the beam has no aberration. This type of beam state observation is not available using the conventional adjustment method using a reference disk.

Further, prior to modulation by the assemblies 101, 103 and 105 a proportion of the laser beam may be diverted by a beam splitter 115 through a collimator lens 120 to a CCD camera 125 (it is necessary to remove the lens of the CCD camera). By this means it is possible to detect that the optical system in the head 100 is accurately collimated and that the emitting angle is correct. In the case of the conventional method using a reference disk, it is necessary to adjust the emitting system in another step before setting the focus and tracking detecting systems. However, the present embodiment makes it possible to perform these operations in one step.

By leading the light branched by the beam splitter 115 to the image sensor in the CCD camera 125 without passing through the collimator lens 120, it is possible to detect a positional deviation of the laser beam emitted from the emitting system as well as determine information for setting a fixed optical system or an objective lens within the head 100.

The emitting system of the head 100 can also be adjusted by the light branched by the beam splitter 115. Adjustment is performed by moving the collimator lens 203 (Figure 2) along the optical axis in accordance with the information detected by the light detecting element in the CCD camera 125 if a problem lies in collimation. Unless the emitting angle is correct, it is necessary to adjust the position in a plane normal to the optical axis of a laser diode.

As shown in Figure 8, the optical head 801 of an integral optical system may use a non-collimated optical system for directing the light emitted from a laser to an objective lens 805 through a half mirror 803 without using a collimator lens. In this type of head, the surface of the optical disk is located at the focal plane shown by the dotted line 810. For this type of head, as shown in Figure 8, it is possible to perform adjustment by the above method by providing a collimating lens 820 at the entrance of the apparatus 850 (which represents all the apparatus to the right of the head 100 in Figure 3) and transforming the laser beam into a collimated beam.

In this case, it is necessary to correctly adjust the relative position between the optical head 801 and the modulation apparatus 850 along the optical axis and in a plane normal to the optical axis. The apparatus of the present invention permits such adjustment by using the CCD camera 125 and collimator 120.

## Claims

1. An apparatus for use in adjusting an optical head of a kind including a laser beam, the apparatus comprising a Faraday rotator, a convex lens and a target located on a common optical axis, the Faraday rotator including a coil surrounding a material exhibiting the Faraday effect for rotating the plane of polarization of the laser beam by applying a current to the coil, the convex lens being mounted upon a first mechanism which moves the lens along the optical axis in accordance with a first electrical signal, and the target being mounted upon a second mechanism which moves the lens transverse the optical axis in accordance with a second electrical signal, the target having at least one groove at its surface.

2. An apparatus according to claim 1, wherein the first and/or the second mechanism includes a piezoelectric element for moving the lens and/or target.

3. An apparatus according to claim 1 or 2, further including a microscope for observing the beam spot of the laser beam focused on the target.

4. An apparatus according to claim 1, 2 or 3, wherein a beam splitter is set on the optical axis for observing the laser beam with a television camera.

5. A method for adjusting an optical head of a kind including a laser beam without using a reference medium, comprising the step of determining the position of at least one element in the detecting system of the optical head by modulating the laser beam using an apparatus claimed in any preceding claim.
